# DEMANDE DE BREVET EUROPEEN

(11) **EP 1 090 933 A1**
(43) Date de publication de la demande: **11.04.2001**
(21) Numéro de dépôt: 00402767.8
(22) Date de dépôt: 06.10.2000
(51) Int. Cl.: C08F 8/30

(54) **Polymères à base d'olefine et de nitrate d'alkényle et leur utilisation comme additif multifonctionnel d'opérabilité à froid dans les combustibles**

(30) Priorité: 08.10.1999 FR 9912549
(71) Demandeur: Elf Antar France, 92800 Puteux (FR)
(72) Inventeur: Couturier, Jean-Luc, 69006 Lyon (FR); Gadolet, Daniel, 69540 Irigny (FR); Germanaud, Laurent, 38540 Heyraux (FR); Maldonaldo, Paul, 69360 Saint Symphorien d'Ozon (FR)
(74) Mandataire: Cabinet Hirsch

(57) **Abrégé**

La présente invention concerne des nouveaux polymères à base d'oléfine et de nitrate d'alkényle et leur utilisation comme additif multifonctionnel d'opérabilité à froid de lubrifiance et d'amélioration du cétane dans les combustibles, ainsi que les compositions contenant ces polymères.

## Description

La présente invention concerne des nouveaux polymères à base d'oléfine et de nitrate d'alkényle et leur utilisation comme additif multifonctionnel d'opérabilité à froid dans les combustibles, ainsi que les compositions contenant ces polymères.

On connaît déjà de nombreux additifs d'opérabilité à froid à base de copolymère éthylène/acétate de vinyle (EVA). Ces additifs de tenue à froid des gazoles permettent d'abaisser la température limite de filtrabilité (TLF) et le point d'écoulement (PTE). Les documents suivants fournissent une illustration des ces additifs: WO-A-9111488, EP-A-0261959, EP-A-0187488, US-A-3961916 et FR-A-2249946.

On connaît aussi une association d'un tel polymère EVA avec un additif procétane. Le document US-P-4365973 décrit une composition comprenant en volume, 3 à 24 parts, de préférence 3 à 20 parts d'un EVA et 4 à 41 parts, de préférence 4 à 35 parts d'un additif procétane consistant en un nitrate d'alkyle, en particulier le nitrate d'isooctyle. Les nitrates d'alkyle sont des additifs procétane connus par ailleurs.

On connaît aussi des additifs de lubrifiance (voir par exemple WO-A-9804656 ainsi que les documents de l'art antérieur cités dans celui-ci) ou anti-usure, notamment pour réduire l'usure des pompes à injection de moteurs Diesel.

Cependant, tous ces additifs nécessitent d'être utilisés en des quantités relativement importantes, ce qui implique d'une part des problèmes de compatibilité et de fabrication et d'autre part un surcoût pour le raffineur, le distributeur et le consommateur.

L'invention vise donc à fournir un additif multifonctionnel qui permette d'améliorer à la fois l'opérabilité à froid (TLF et PTE), l'indice de cétane et la lubrifiance (ou anti-usure), destiné notamment aux combustibles et/ou carburants.

L'invention a pour objet des polymères à base d'oléfine et de nitrate d'alkényle.

Ainsi, l'invention fournit un polymère à base d'oléfine et de nitrate d'alkényle de formule (I) ci-après : 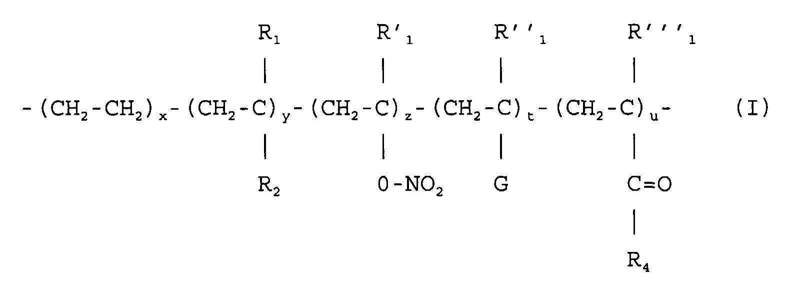 dans laquelle
R₁, R'₁, R''₁ et R'''₁, identiques ou différents, sont choisis parmi l'hydrogène et les radicaux alkyles comprenant de 1 à 10 atomes de carbone, de préférence de 1 à 6 atomes de carbone et en particulier l'hydrogène ou le radical méthyle;
R₂ est choisi parmi l'hydrogène, les radicaux alkyles comprenant de 1 à 20 atomes de carbone, les radicaux aromatiques ayant de 6 à 10 atomes de carbone, le groupement OR'₂, R'₂ étant l'hydrogène ou un groupe alkyle comprenant de 1 à 6 atomes de carbone, étant entendu que R₁ et R₂ ne peuvent représenter en même temps un atome d'hydrogène,
G correspond à au moins l'un des radicaux carbonylés
   -O-C(O)-R₃ ; -C(O)-O-R₃ ; -C(O)-R₃
dans lesquels R₃ est choisi parmi les radicaux alkyles comprenant de 1 à 13 atomes de carbone,
R₄ est choisi parmi les radicaux -(O-CH₂-CH₂)_{P}-NO₃ et -O-(CH₂)_{q}-N0₃, dans lesquels p et q sont des entiers compris entre 1 et 4 inclus,
x, y, z, t et u correspondant à des rapports molaires tels que:
la somme x+y varie de 0.80 à 0.98, de préférence de 0.85 à 0.95, x ou y pouvant être nul,
la somme u+z varie de 0.00025 à 0.17, de préférence de 0.0015 à 0.1, u ou z pouvant être nul, et
t est tel que t=1-(x+y)-(u+z).

Les radicaux alkyle peuvent être linéaires ou ramifiés. On peut citer les radicaux suivants, dans l'ordre croissant du nombre d'atomes de carbone: méthyle, éthyle, isopropyle, n-propyle, n-, iso- et tert-butyle, n-pentyle, iso-pentyle, néo-pentyle, n-hexyle, méthyl-4-pentènyle, octyle, 2-éthylhexyl, ter-octyle, nonyle, iso-nonyle, néononyle, décyle, isodécyle, néodécyle, undécyle, néoundécyle, dodécyle, iso-dodécyle, néododécyle, tétradécyle, octadécyle.

A titre de radical aromatique, on peut citer le benzène, notamment dans le cadre d'un monomère styrène.

Selon un premier mode de réalisation, le polymère répond à la formule (II) ci-après :

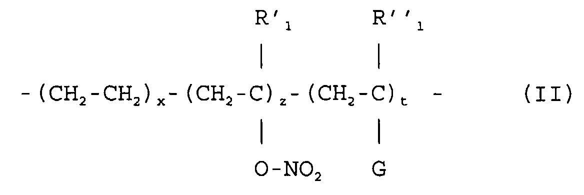

Selon un second mode de réalisation, le polymère répond à la formule (III) ci-après :

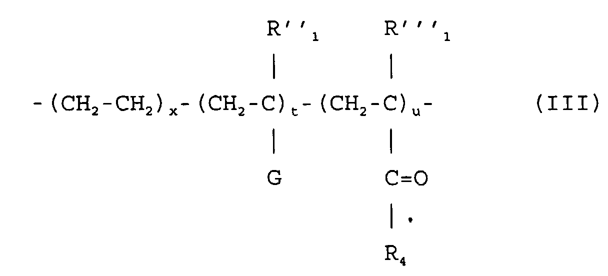

Selon un mode de réalisation, le groupe G correspond à -O-C(O)-R₃ ,
dans lequel R₃ est choisi dans le groupe constitué par CH₃, C₂H₅, C₃H₇ et les groupements 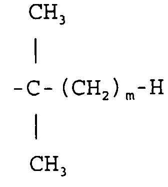 dans lesquels m varie de 1 à 10 et de préférence de 1 à 7.

De préférence R''₁ est l'hydrogène et G est choisi dans le groupe comprenant acétate, propionate, butyrate, isobutyrate, pivalate, pentanoate, 2-éthylhexanoate, octanoate, nonanoate, isononanoate, néononanoate, décanoate, isodécanoate, néodécanoate, undécanoate, néoundécanoate, dodécanoate, isododécanoate, néododécanoate, avantageusement acétate et propionate.

L'invention fournit aussi des procédés de préparation, l'utilisation et des compositions comprenant ces nouveaux polymères.

L'invention est maintenant décrite plus en détails dans la description qui suit.

### Polymères selon l'invention.

Ainsi qu'il a été déjà indiqué, l'invention fournit des polymères à base d'oléfine, notamment éthylène, et de nitrate d'alkényle.

Des mélanges de polymères sont aussi possibles; ils peuvent être obtenus par mélange de polymères distincts ou par mélange de monomères distincts.

Le poids moléculaire des polymères selon l'invention varie de 500 à 25000, de préférence 1000 à 15000. D'autres monomères peuvent aussi être présents en des quantités faibles n'affectant pas les propriétés fondamentales des polymères selon l'invention.

On préférera les polymères dans lesquels y est nul (éthylène comme seul monomère oléfinique).

### Procédé de préparation des polymères.

Les polymères peuvent être préparés par les procédés classiques connus dans l'art.

Un premier procédé est la polymérisation radicalaire des monomères de départ selon les rapports molaires appropriés.

Les monomères de départ sont polymérisés en présence d'initiateurs classiques, tels qu'oxygène, peroxides, hydroperoxides, ou composés azo. De tels initiateurs sont par exemple décrits dans "Ullmann's Encyclopedia of Industrial Chemistry", 4^{th} ed., vol. 19, pp169-178. La réaction est mise en oeuvre en général sous des pressions de 50 à 700 MPa, de préférence 150 à 300 MPa, à des températures de 100 à 350°C, de préférence 120 à 325°C. Le poids moléculaire est ajusté en fonction des conditions opératoires et des rapports molaires des monomères de départ. Des régulateurs de masse moléculaire peuvent aussi être utilisés. Les différentes vitesses de polymérisation, si tel est le cas, sont prises en compte pour la détermination des rapports molaires de départ (par exemple la teneur en ester vinylique sera supérieure dans le mélange de départ, par rapport à la valeur finale recherchée dans le polymère). La polymérisation est mise en oeuvre dans un réacteur haute pression classique, tels qu'autoclaves et réacteurs tubulaires. Le mélange réactionnel peut contenir des solvants ou non, de préférence le mélange réactionnel est exempt de solvant.

Un tel procédé est décrit par exemple dans le brevet US-P-5254652.

Un second procédé comprend deux étapes principales:
- une première étape de préparation d'un polymère fonctionnalisé soit par synthèse directe d'au moins une oléfine et d'au moins un monomère insaturé porteur d'au moins une fonction alcool primaire ou hydroxyle, soit par synthèse indirecte d'au moins une oléfine et d'au moins un ester insaturé hydrolysable suivie d'une hydrolyse partielle desdites fonctions esters; et
- une seconde étape de nitration des fonctions alcools primaires ou hydroxyles du polymère fonctionnalisé obtenu à l'étape précédente par un mélange nitrant.

Dans le cas de la synthèse directe, le monomère insaturé porteur d'au moins une fonction alcool primaire ou hydroxyle est choisi avantageusement parmi l'acrylate ou le méthacrylate d'hydroxyéthyle, ou encore le monoacrylate ou le monométhacrylate d'hydroxy-2-éthyléther et leurs homologues supérieurs, ou encore le hydroxyéthyl-vinyl-éther et les homologues supérieurs. Le polymère fonctionnalisé est obtenu par polymérisation radicalaire, en particulier dans les conditions analogues à celles décrites dans le premier procédé, à partir d'au moins une oléfine et d'au moins un monomère insaturé porteur d'au moins une fonction alcool primaire ou hydroxyle.

Dans le cas de la synthèse indirecte, l'ester insaturé hydrolysable est choisi notamment parmi les dérivés de formule: CH₂-CH(R₁)-O-C(O)-R₃, où R₁ et R₃ ont les significations précédemment indiquées. L'ester insaturé hydrolysable est avantageusement choisi parmi l'acétate de vinyle, le propionate de vinyle, le butyrate de vinyle, l'octanoate de vinyle, l'éthyl-2-hexanoate de vinyle, l'isononanoate de vinyle, le néoundécanoate de vinyle, le néododécanoate de vinyle. L'acétate et le propionate de vinyle sont avantageusement préférés. Comme dans la synthèse directe, au moins une oléfine et au moins un ester insaturé hydrolysable sont polymérisés par voie radicalaire, en particulier dans les conditions analogues à celles décrites dans le premier procédé. Ultérieurement, on procède à une hydrolyse partielle de ce polymère, de 5 à 95%, de préférence de 10 à 50%, des groupes esters, avantageusement des fonctions acétate ou propionate. Cette hydrolyse est effectuée par exemple par une solution basique de soude, de potasse, de soude méthanolique et/ou de potasse méthanolique, la soude méthanolique étant préférée, à une température comprise entre 20 et 110°C, de préférence entre 50 et 70 °C, dans un solvant choisi parmi le tétrahydrofurane et le toluène. Une étape intermédiaire de récupération du produit partiellement hydrolysé est de préférence mise en oeuvre à l'issue de cette première étape; cette récupération peut se faire par précipitation du produit partiellement hydrolysé au moyen d'un solvant, de préférence du méthanol.

Dans la seconde étape, la nitration est mise en oeuvre par exemple entre 0 et 30°C dans un solvant hydrocarboné et/ou chloré comme le dichlorométhane contenant le produit de l'étape précédente (éventuellement précipité), par addition d'un mélange nitrant pouvant être le mélange acide nitrique concentré/acide sulfurique ou le mélange acide nitrique concentré/anhydride acétique. Le produit final porteur de fonctions nitrates est recueilli de façon classique par des méthodes connues dans l'art.

### Additif multifonctionnel.

Le polymère selon l'invention est un additif multifonctionnel.

Il améliore l'opérabilité à froid, à savoir la température limite de filtrabilité (TLF) et/ou le point d'écoulement (PTE). Les TLF et PTE sont mesurés conformément aux normes NF EN 116 et NF EN 23015, respectivement. Cette opérabilité à froid est améliorée principalement aux températures inférieures à 0°C, et même - 10°C.

En tant qu'additif procétane, il améliore l'indice de cétane. L'indice de cétane est mesuré conformément à la norme ASTM-D613.

Il améliore la lubrifiance et donc réduit l'usure, notamment au niveau de la pompe d'injection dans les moteurs Diesel. La lubrifiance ou pouvoir anti-usure est mesurée conformément à la norme ISO 12156-1.

L'additif est utile pour les combustibles (fuel oils domestiques) et les carburants (Diesel et biofuel).

### Composition comprenant le polymère.

L'invention fournit aussi une composition comprenant le polymère selon l'invention.

Ces compositions comprennent comme partie majeure une coupe hydrocarbonée du groupe constitué par les distillats moyens, les biofuels, les gazoles de synthèse et leurs mélanges. Un distillat moyen correspond notamment à une coupe dont le point d'ébullition est compris entre 120 et 450°C, de préférence entre 150 et 400°C. Un biofuel comprend une huile végétale et/ou un (trans)ester d'une huile végétale. Comme biofuel, on utilisera en particulier des esters d'huiles végétales (EHMV) et plus particulièrement l'ester méthylique de colza (EMC). On peut aussi utiliser un gazole de synthèse, tel qu'obtenu par un "process gas-to-liquid" mettant en oeuvre la synthèse de Fischer-Tropsch. Comme mélange, on utilisera notamment des mélanges gazole/biofuel contenant jusqu'à 30% en poids de biofuel. Ces divers carburants peuvent être émulsionnés, avec de 5 à 30% en poids d'eau ou d'un mélange eau/alcool ou polyol.

Les compositions selon l'invention comprennent une partie mineure comprenant au moins un polymère selon l'invention.

La composition contient en général moins de 5000ppm, de préférence moins de 2000 ppm, avantageusement entre 50 et 1000ppm, du polymère selon l'invention.

L'invention peut en outre contenir un ou plusieurs additif(s) classique(s), présent(s) en des quantités classiques, par exemple jusqu'à 5000ppm, par rapport à la composition finale.

Parmi ces additifs, on peut citer particulièrement:
a) additif procétane, notamment (mais non limitativement) choisi parmi les nitrates d'alkyle, de préférence le nitrate de 2-éthylhexyle, les peroxydes d'aroyle, de préférence le peroxyde de benzoyle, et les peroxydes d'alkyle, de préférence le peroxyde de terbutyle. Avec ces additifs, en particulier les nitrates, on note un effet synergique remarquable. Par exemple, ledit polymère et le nitrate d'alkyle peuvent être présents en des ratios en poids nitrate:polymère compris entre 1:10 et 50:1, de préférence entre 1:1 et 20:1.
b) additif de filtrabilité, notamment (mais non limitativement) choisi parmi les copolymères éthylène/acétate de vinyle (EVA), éthylène/propionate de vinyle (EVP), éthylène/éthanoate de vinyle (EVE), éthylène/méthacrylate de méthyle (EMMA), et éthylène/fumarate d'alkyle. Des exemples de tels additifs sont donnés dans les documents suivants: EP-A-0187488, FR-A-2490669, EP-A-0722481, EP-A-0832172.
c) additif anti-mousse, notamment (mais non limitativement) choisi parmi les polysiloxanes, les polysiloxanes oxyalkylés, et les amides d'acides gras issus d'huiles végétales ou animales. Des exemples de tels additifs sont donnés dans les documents suivants: EP-A-0861182, EP-A-0663000, EP-A-0736590.
d) additif détergent et/ou anti-corrosion, notamment (mais non limitativement) choisi dans le groupe constitué par les amines, les succinimides, les alkénylsuccinimides, les polyalkylamines, les polyalkyles polyamines et les polyétheramines. Des exemples de tels additifs sont donnés dans les documents suivants: EP-A-0938535.
e) additif de lubrifiance ou anti-usure, notamment (mais non limitativement) choisi dans le groupe constitué par les acides gras et leurs dérivés ester ou amide, notamment le monooléate de glycérol, et les dérivés d'acides carboxyliques mono- et polycycliques. Des exemples de tels additifs sont donnés dans les documents suivants: EP-A-0680506, EP-A-0860494, WO-A-9804656, EP-A-0915944, FR-A-2772783, FR-A-2772784.
f) additif de point de trouble, notamment (mais non limitativement) choisi dans le groupe constitué par les terpolymères oléfine à chaîne longue/ester (méth)acrylique/maléimide, et les dérivés d'esters d'acides fumarique/maléique. Des exemples de tels additifs sont donnés dans les documents suivants: EP-A-0071513, EP-A-0100248, FR-A-2528051, FR-A-2528051, FR-A-2528423, EP-A-0112195, EP-A-0172758, EP-A-0271385, EP-A-0291367.
g) additif d'anti-sédimentation, notamment (mais non limitativement) choisi dans le groupe constitué par les copolymères acide (méth)acrylique/(méth)acrylate d'alkyle amidifié par une polyamine, les alkénylsuccinimides de polyamine, les dérivés d'acide phtalamique et d'amine grasse à double chaîne. Des exemples de tels additifs sont donnés dans les documents suivants: EP-A-0261959, EP-A-00593331, EP-A-0674689, EP-A-0327423, EP-A-0512889, EP-A-0832172.

Une composition particulièrement intéressante est celle dans laquelle le distillat moyen et/ou le biofuel présente une teneur en soufre inférieure à 0.2%, de préférence inférieure à 0.05%, avantageusement inférieure à 0.01%, en poids par rapport au poids de la composition.

Les compositions selon l'invention peuvent être utilisées notamment en tant que combustible ou en tant que carburant, en particulier en tant que carburant Diesel ou bioDiesel.

### Exemples.

Les exemples suivants illustrent l'invention sans la limiter.

### Exemple 1

On prépare un EVA porteur de fonctions nitrates qui sera désigné EVA-A-NO₃.

### Hydrolyse

L'EVA de départ est un EVA, désigné EVA-A, qui est un copolymère d'éthylène et d'acétate de vinyle contenant 28% poids d'acétate de vinyle (Mw=14400 en équivalent polystyrène, viscosité à 100°C=1,25 Pa.s).

Dans un réacteur en verre de 2 l, muni d'un réfrigérant, d'une sonde de température et d'une agitation mécanique, on charge 150 g d'EVA-A (0,49 mol d'acétate), 12 g de soude méthanolique à 10% (0,03 mol) et 900 ml de toluène. On chauffe à 60°C et, sous agitation, on laisse réagir pendant 1 h, puis on ajoute 300 ml d'une solution aqueuse d'acide chlorhydrique 0,1 M (0,03 mol). Sous agitation, on laisse le mélange réactionnel revenir à température ambiante, puis on le coule dans 1 l de méthanol. Le produit est filtré puis séché sous vide. On obtient 100 g de solide blanc. Le taux d'hydrolyse des fonctions acétates, déterminé par RMN ¹H (intégration du signal CH-OH par rapport au signal CH-OAc), est de 18%.

### Nitration

Dans un réacteur en verre de 1 l, muni d'un réfrigérant, d'une ampoule de coulée, d'une sonde de température et d'une agitation mécanique, on charge 11 g d'acide nitrique 100% (0,175 mol) et 1 g d'urée (0,017 mol). On ajoute lentement 180 g d'anhydride acétique (1,765 mol). A température ambiante et sous vive agitation, on coule goutte à goutte 54 g d'EVA-A hydrolysé obtenu précédemment (0,032 mol d'hydroxyle) dissous dans 260 g de dichlorométhane. A la fin de la coulée, on laisse réagir pendant 1 h à température ambiante, puis on verse lentement le mélange réactionnel dans 160 g d'eau glacée. La phase organique est récupérée, lavée avec 100 ml d'une solution aqueuse de K₂CO₃ à 35%, puis lavé à l'eau jusqu'à neutralité. Après séchage sur sulfate de magnésium, le solvant est évaporé sous vide. Le produit est repris dans 100 ml de THF, puis précipité dans 1 l de méthanol. Après filtration et séchage sous vide, on obtient 50 g de solide jaunâtre. L'analyse IR montre la disparition de la bande OH et l'apparition de la bande nitrate de 1628 cm⁻¹. Le taux de nitration, déterminé par RMN ¹H en intégrant le signal CH-NO₃ par rapport au signal CH-OAc₁ est de 18%. La teneur en fonction nitrate du produit est donc de 0,58 mmol/g.

### Exemple 2

On prépare un EVA porteur de fonctions nitrates qui sera désigné EVA-B-NO₃.

### Hydrolyse

L'EVA de départ est un EVA, désigné EVA-B, qui est un copolymère d'éthylène et d'acétate de vinyle contenant 33% poids d'acétate de vinyle (Mw=7300 en équivalent polystyrène, viscosité à 100°C=0,4 Pa.s).

Dans un réacteur en verre de 2 l, muni d'un réfrigérant, d'une sonde de température et d'une agitation mécanique, on charge 120 g d'EVA-B à 70% dans un solvant aromatique (0,32 mol d'acétate), 8,8 g de soude méthanolique à 10% (0,022 mol) et 670 ml de toluène. On chauffe à 60°C et, sous agitation, on laisse réagir pendant 1 h, puis on ajoute 220 ml d'une solution aqueuse d'acide chlorhydrique 0,1 M (0,022 mol). Sous agitation, on laisse le mélange réactionnel revenir à température ambiante, puis on évapore sous vide. Le produit est repris par 100 ml de THF, puis précipité dans 2 l de méthanol. Après filtration et séchage sous vide, on obtient 67 g de solide blanc. Le taux d'hydrolyse des fonctions acétates, déterminé par RMN ¹H (intégration du signal CH-OH par rapport au signal CH-OAc), est de 21%.

### Nitration

Dans un réacteur en verre de 1 l, muni d'un réfrigérant, d'une ampoule de coulée, d'une sonde de température et d'une agitation mécanique, on charge 16,1 g d'acide nitrique 100% (0,256 mol) et 1,5 g d'urée (0,025 mol). On ajoute lentement 261 g d'anhydride acétique (2,56 mol). A température ambiante et sous vive agitation, on coule goutte à goutte 67 g d'EVA-B hydrolysé obtenu précédemment (0,054 mol d'hydroxyle) dissous dans 375 g de dichlorométhane. A la fin de la coulée, on laisse réagir pendant 1 h à température ambiante, puis on verse lentement le mélange réactionnel dans 230 g d'eau glacée. La phase organique est récupérée, lavée avec 150 ml d'une solution aqueuse de K₂CO₃ à 35%, puis lavé à l'eau jusqu'à neutralité. Après séchage sur sulfate de magnésium, le solvant est évaporé sous vide. Le produit est repris par 100 ml de THF, puis précipité dans 1 l de méthanol. Après filtration et séchage sous vide, on obtient 61 g d'un solide collant jaunâtre. L'analyse IR montre la disparition de la bande OH et l'apparition de la bande nitrate à 1628 cm⁻¹. Le taux de nitration, déterminé par RMN ¹H en intégrant le signal CH-NO₃ par rapport au signal CH-OAc est de 21%. La teneur en fonction nitrate du produit est donc de 0,81 mmol/g.

### Exemple 3

On détermine l'efficacité comme additif procétane de divers composants, dont les EVA-A et EVA-B non fonctionnalisés et les EVA-A-NO₃ et EVA-B-NO₃ porteurs de fonctions nitrates tels que synthétisés dans les exemples 1 et 2, ainsi que du 2-éthylhexylnitrate (2-EHN). Le gazole est un gazole comprenant 500 ppm de soufre, et satisfaisant les caractéristiques de la norme EN 590. On suit la norme ASTM-D613. On obtient les résultats suivants :

**TABLEAU 1**

| Gazole | Cétane |
|---|---|
| Gazole vierge | 50,8 |
| 2-EHN (1000 ppm) | 52,9 |
| EVA-A (250 ppm) | 49,7 |
| 2-EHN (1000 ppm) + EVA-A (250 ppm) | 52,3 |
| EVA-A-NO₃ (250 ppm) | 50,0 |
| 2-EHN (1000 ppm) + EVA-A-NO₃ (250 ppm) | 53,7 |
| EVA-B (250 ppm) | 50,1 |
| 2-EHN (1000 ppm) + EVA-B (250 ppm) | 53,0 |
| EVA-B-NO₃ (250 ppm) | 49,9 |
| 2-EHN (1000 ppm) + EVA-B-NO₃ (250 ppm) | 54,7 |

On note un effet synergique entre le 2-EHN et les EVA-NO₃ porteurs de fonctions nitrates de l'invention. Dans le cas de l'EVA-A-NO₃ de l'exemple 1, celui-ci apporte 2,5% des fonctions nitrates (sur le total 2-EHN et EVA-A-NO₃) ; le gain en indice de cétane est pourtant de 1,4 point. Dans le cas de l'EVA-B-NO₃ de l'exemple 2, celui-ci apporte 3,5% des fonctions nitrates pour un gain de 1,7 point.

### Exemple 4

On détermine l'efficacité sur la température limite de filtrabilité (TLF) des EVA-NO₃ selon l'invention.

On teste les EVA-NO₃ des exemples 1 et 2 en dopant successivement les 8 gazoles par des quantités de 125 et 250 ppm de chacun des deux additifs. On teste 8 gazoles présentant les caractéristiques ci-après :

**TABLEAU 2**

| Gazoles | 1 | 2 | 3 | 4 | 5 | 6 | 7 | 8 |
|---|---|---|---|---|---|---|---|---|
| Point initial (°C) pr EN ISO 3405 | 162 | 159 | 162 | 181 | 166 | 163 | 176 | 155 |
| Point final (°C) pr EN ISO 3405 | 377 | 363 | 354 | 363 | 367 | 368 | 362 | 340 |
| Masse volumique à 15°C (kg/dm³) NF EN ISO 12185 | 0.833 | 0.836 | 0.835 | 0.830 | 0.841 | 0.833 | 0.841 | 0.829 |
| Soufre (ppm) NF M 07-059 | 450 | 486 | 350 | 1550 | 1830 | 378 | 270 | 120 |
| Point de trouble (°C) NF EN 23015 | -4 | -6 | -9 | -2 | -6 | -4 | -6 | -4 |
| Température Limite de filtrabilité (°C) NF EN 116 | -4 | -5 | -7 | -2 | -5 | -5 | -6 | -6 |
| Point d'écoulement (°C) NF T 60-105 | -12 | -15 | -12 | -9 | -12 | -12 | -12 | -9 |
| Point d'éclair (°C) NF EN 22719 | 64 | - | 65 | 75 | 66 | 58 | 70 | 82 |

Les résultats avec des EVA-NO₃ sont consignés dans les tableaux 3 et 4 ci-après, les tableaux comparatifs 3A et 4A donnant respectivement les résultats des essais mis en oeuvre avec les additifs EVA-A et EVA-B non fonctionnalisés.

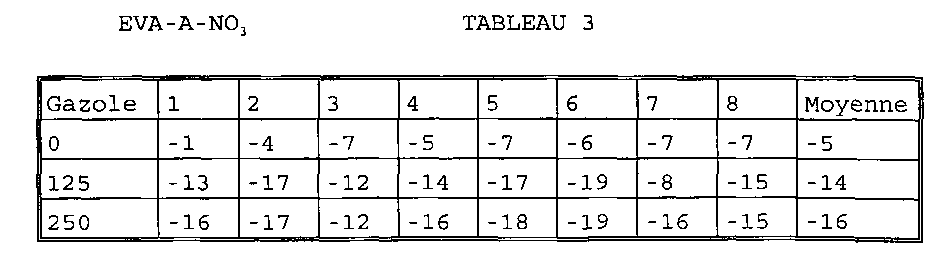

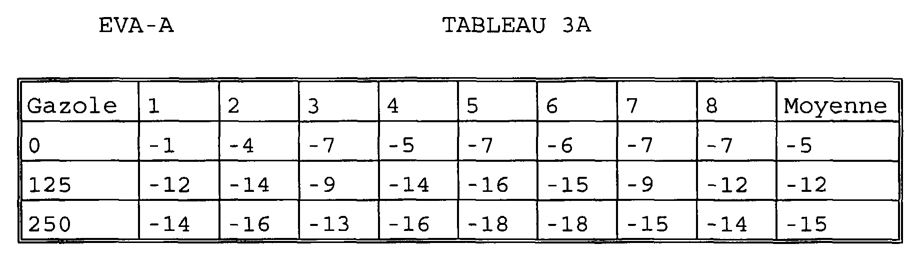

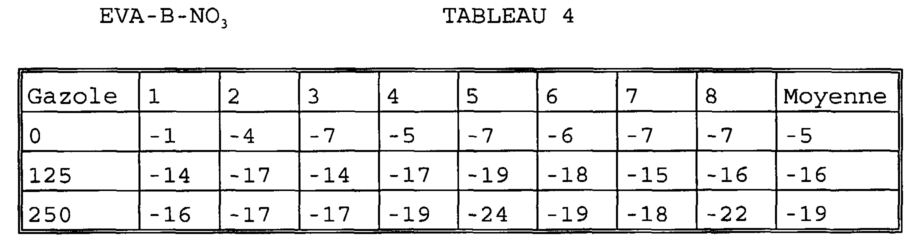

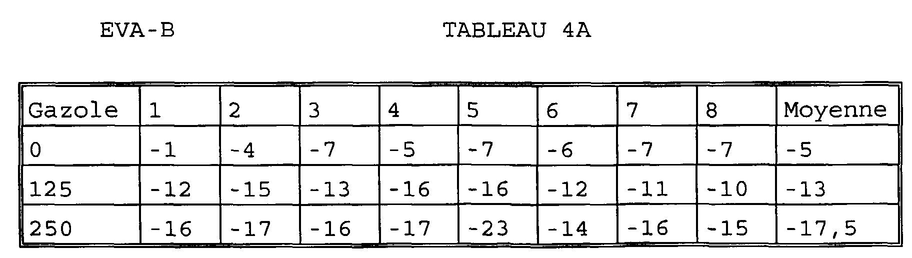

L'EVA-A-NO₃ de l'exemple 1 conduit à des gains de 10°C et 12°C à 125 et 250 ppm, respectivement.

L'EVA-B-NO₃ de l'exemple 2 conduit à des gains de 5°C et 12°C à 125 et 250 ppm, respectivement.

### Exemple 5

On détermine l'efficacité sur le point d'écoulement des EVA-NO₃ selon l'invention, en dopant les gazoles avec L'EVA-A-NO₃. conformément à la norme NF EN 23015.

**TABLEAU 5**

| Gazole | 1 | 2 | 3 | 4 | 5 | 6 | 7 | 8 | Moyenne |
|---|---|---|---|---|---|---|---|---|---|
| 0 | -12 | -15 | -12 | -9 | -12 | -12 | -12 | -12 | -12 |
| 62.5 | -18 | -21 | -21 | -24 | -24 | -24 | -27 | -21 | -21 |
| 125 | -27 | -27 | -30 | -30 | -33 | -30 | -33 | -27 | -30 |

L'EVA-A-NO₃ de l'exemple 1 conduit à des gains de 9°C et 18°C à 62,5 et 125 ppm, respectivement.

### Exemple 6

On détermine l'efficacité sur la lubrifiance des polymères selon l'invention.

Le pouvoir lubrifiant de ces additifs a été testé dans les conditions de l'essai HFRR (High Frequency Reciprocating Rig) tel que décrit dans la norme internationale ISO 12156-1. Le test consiste à imposer conjointement à une bille d'acier en contact avec un plateau métallique immobile, une pression correspondant à un poids de 200 grammes et un déplacement alternatif de 1 mm à une fréquence de 50 Hz. La température est maintenue à 60°C pendant toute le durée (75 minutes) du test. Le pouvoir lubrifiant est exprimé par la valeur moyenne des diamètres d'usure de la bille. Un faible diamètre d'usure (généralement inférieur à 460 µm) indique un bon pouvoir lubrifiant. A l'inverse un diamétre d'usure important (supérieur à 400 µm) traduit un pouvoir lubrifiant d'autant plus insuffisant que la valeur du diamètre d'usure est plus élevée.

**TABLEAU 6**

| Gazole à 500 ppm de soufre type EN 590 | Diamètre d'usure (µm) |
|---|---|
| Gazole vierge | 551 |
| EVA-A (250 ppm) | 490 |
| EVA-A-NO₃ (250 ppm) | 448 |
| EVA-B (250 ppm) | 480 |
| EVA-B-NO₃ (250 ppm) | 418 |

Ces résultats montrent que les additifs selon l'invention ont un effet marqué d'amélioration de la lubrifiance des gazoles lorsqu'on les compare à des copolymères éthylène-acétate de vinyle connus dans l'art antérieur.

L'invention n'est pas limitée aux modes de réalisation décrits mais est susceptible de nombreuses variations aisément accessibles à l'homme de l'art.

## Revendications

1. Polymère à base d'oléfine et de nitrate d'alkényle de formule (I) ci-après : 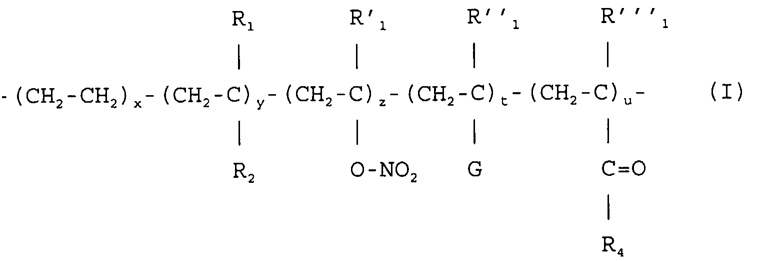 dans laquelle
R₁, R₁, R''₁ et R"'₁, identiques ou différents, sont choisis parmi l'hydrogène et les radicaux alkyles comprenant de 1 à 10 atomes de carbone;
R₂ est choisi parmi l'hydrogène, les radicaux alkyles comprenant de 1 à 20 atomes de carbone, les radicaux aromatiques ayant de 6 à 10 atomes de carbone, le groupement OR'₂, R'₂ 2 étant l'hydrogène ou un groupe alkyle comprenant de 1 à 6 atomes de carbone, étant entendu que R₁ et R₂ ne peuvent représenter en même temps un atome d'hydrogène,
G correspond à au moins l'un des radicaux carbonylés
-O-C(O)-R₃ ; -C(O)-O-R₃ ; -C(O)-R₃
dans lesquels R₃ est choisi parmi les radicaux alkyles comprenant de 1 à 13 atomes de carbone,
R₄ est choisi parmi les radicaux -(O-CH₂-CH₂)_{P}-NO₃ et -O-(CH₂)_{q}-NO₃, dans lesquels p et q sont des entiers compris entre 1 et 4 inclus,
x, y, z, t et u correspondant à des rapports molaires tels que:
la somme x+y varie de 0.80 à 0.98, x ou y pouvant être nul,
la somme u+z varie de 0.00025 à 0.17, u ou z pouvant être nul, et
t est tel que t=1-(x+y)-(u+z).

2. Polymère selon la revendication 1 de formule (II) ci-après :

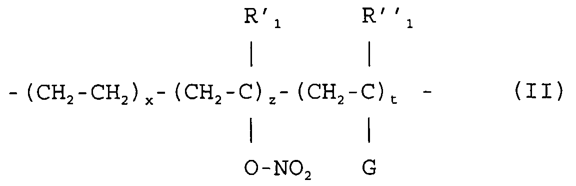

3. Polymère selon la revendication 1 de formule (III) ci-après :

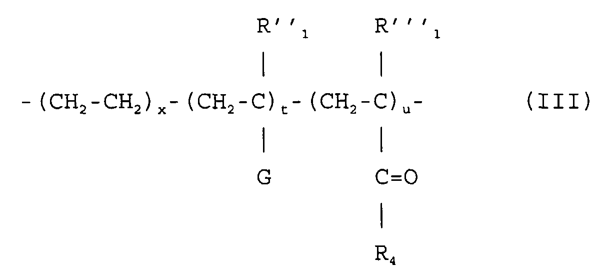

4. Polymère selon l'une quelconque des revendications 1 à 3, dans lequel la somme x+y varie de 0.85 à 0.95 et la somme u+z varie de 0.0015 à 0.1.

5. Polymère selon l'une quelconque des revendications 1 à 4, dans lequel le groupe G correspond à
-O-C(O)-R₃ ,
dans lequel R₃ est choisi dans le groupe constitué par CH₃, C₂H₅, C₃H₇ et les groupements 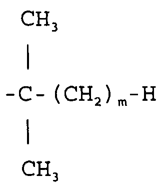 dans lesquels m varie de 1 à 10 et de préférence de 1 à 7.

6. Procédé de préparation d'un polymère selon l'une quelconque des revendications 1 à 5, comprenant la polymérisation radicalaire des monomères de départ selon les rapports molaires appropriés.

7. Procédé de préparation d'un polymère selon l'une quelconque des revendications 1 à 5, comprenant
- une première étape de préparation d'un polymère fonctionnalisé par polymérisation radicalaire d'au moins une oléfine et d'au moins un monomère insaturé porteur d'au moins une fonction alcool primaire ou hydroxyle; et
- une seconde étape de nitration des fonctions alcools primaires ou hydroxyles du polymère fonctionnalisé obtenu à l'étape précédente par un mélange nitrant.

8. Procédé de préparation d'un polymère selon l'une quelconque des revendications 1 à 5, comprenant
- une première étape de préparation d'un polymère par polymérisation radicalaire d'au moins une oléfine et d'au moins un ester insaturé hydrolysable, suivie d'une hydrolyse partielle desdites fonctions esters; et
- une seconde étape de nitration des fonctions alcools primaires ou hydroxyles du polymère fonctionnalisé obtenu à l'étape précédente par un mélange nitrant.

9. Utilisation d'un polymère selon l'une quelconque des revendications 1 à 5, comme additif multifonctionnel d'opérabilité à froid, d'amélioration de cétane et de lubrifiance ou d'anti-usure des combustibles et carburants.

10. Composition comprenant une partie majeure d'au moins une coupe hydrocarbonée en particulier du groupe constitué par les distillats moyens, les biofuels, les gazoles de synthèse, les carburants émulsionnés à l'eau et/ou aux mélanges eau/alcools ou polyols, et leurs mélanges, et une partie mineure comprenant au moins un polymère selon l'une quelconque des revendications 1 à 5.

11. Composition selon la revendication 10 caractérisé en ce qu'il contient moins de 5000 ppm, de préférence moins de 2000 ppm, avantageusement entre 50 et 1000ppm, dudit polymère.

12. Composition selon la revendication 10 ou 11, caractérisé en ce qu'il comprend en outre au moins un additif procétane choisi parmi les nitrates d'alkyle, de préférence le nitrate de 2-éthylhexyle, les peroxydes d'aroyle, de préférence le peroxyde de benzoyle, et les peroxydes d'alkyle, de préférence le peroxyde de terbutyle.

13. Composition selon la revendication 12, comprenant ledit polymère et un nitrate d'alkyle en des ratios en poids nitrate:polymère compris entre 1:10 et 50:1, de préférence entre 1:1 et 20:1.

14. Composition selon l'une quelconque des revendications 10 à 13, caractérisé en ce qu'il contient en outre au moins un additif de filtrabilité choisi parmi les polymères éthylène/acétate de vinyle (EVA), éthylène/propionate de vinyle (EVP), éthylène/éthanoate de vinyle (EVE), éthylène/méthacrylate de méthyle (EMMA), et éthylène/fumarate d'alkyle.

15. Composition selon l'une quelconque des revendications 10 à 14, caractérisé en ce qu'il contient en outre au moins un additif anti-mousse choisi parmi les polysiloxanes, les polysiloxanes oxyalkylés et les amides d'acides gras issus d'huiles végétales ou animales.

16. Composition selon l'une quelconque des revendications 10 à 15, caractérisé en ce qu'il contient en outre au moins un additif détergent choisi dans le groupe constitué par les amines, les succinimides, les alkénylsuccinimides, les polyalkylamines, les polyalkyls polyamines et les polyétheramines.

17. Composition selon l'une quelconque des revendications 10 à 16, caractérisé en ce qu'il contient en outre au moins un additif de lubrifiance ou anti-usure choisi dans le groupe constitué par les acides gras et leurs dérivés ester ou amide, notamment le monooléate de glycérol, et les dérivés d'acides carboxyliques mono- et polycycliques.

18. Composition selon l'une quelconque des revendications 10 à 17, caractérisé en ce qu'il contient en outre au moins un additif de point de trouble choisi dans le groupe constitué par les terpolymères oléfine à chaîne longue/ester (méth)acrylique/maléimide, et les dérivés d'esters d'acides fumarique/maléique.

19. Composition selon l'une quelconque des revendications 10 à 18, caractérisé en ce que il contient en outre au moins un additif d'anti-sédimentation choisi dans le groupe constitué par les copolymères acide (méth)acrylique/(méth)acrylate d'alkyle amidifié par une polyamine, les alkénylsuccinimides de polyamine, les dérivés d'acide phtalamique et d'amine grasse à double chaîne.

20. Composition selon l'une quelconque des revendications 10 à 19, dans laquelle le distillat moyen et/ou le biofuel présente une teneur en soufre inférieure à 0.2%, de préférence inférieure à 0.05%, avantageusement inférieure à 0.01%, en poids par rapport au poids de la composition.

21. Composition selon l'une quelconque des revendications 10 à 20, qui est un combustible ou un carburant.
